# EUROPEAN PATENT APPLICATION

(11) **EP 4 691 869 A1**
(43) Date of publication of application: **11.02.2026**
(21) Application number: 24778087.7
(22) Date of filing: 27.03.2024
(51) Int. Cl.: B60W 20/11, B60W 20/12, B60W 20/15

(54) **HYBRID VEHICLE CONTROL METHOD AND APPARATUS, STORAGE MEDIUM, AND VEHICLE**

(30) Priority: 28.03.2023 CN 202310315555
(71) Applicant: Hycet Transmission System (Jiangsu) Co., Ltd., Zhenjiang, Jiangsu 212200 (CN)
(72) Inventor: CHANG, Xiao, Zhenjiang, Jiangsu 212200 (CN)
(74) Representative: Murgitroyd & Company
(86) International application number: PCT/CN2024/084195
(87) International publication number: WO 2024/199301

(57) **Abstract**

Disclosed are a control method and a device (300) for a vehicle with a hybrid power, a storage medium, and a vehicle (400). The control method includes: acquiring a current driving mode and a working condition information of the vehicle (400) in a case that the vehicle is determined to be in a slipping state; determining whether the vehicle (400) satisfies a mode switching condition based on the working condition information; and controlling the vehicle (400) to switch from a series mode to an idle electric four-wheel drive mode in a case that the current driving mode is the series mode and the vehicle (400) satisfies the mode switching condition.

## Description

### CROSS-REFERENCE TO RELATED APPLICATIONS

The present application claims priority to Chinese Patent Application No. 202310315555.4, filed with the China National Intellectual Property Administration on March 28, 2023, and titled "CONTROL METHOD AND DEVICE FOR VEHICLE WITH HYBRID POWER, STORAGE MEDIUM, AND VEHICLE". The disclosure of the aforementioned application is hereby incorporated by reference in its entirety.

### TECHNICAL FIELD

The present application relates to the field of vehicle control technologies, and in particular, to a control method and a device for a vehicle with a hybrid power, a storage medium and a vehicle.

### BACKGROUND

With advancement of technologies and development of automotive electronics, a four-wheel drive vehicle with a hybrid power is generally equipped with a plurality of power modes including a series mode to satisfy different driving demands. In the series mode, an engine drives a front drive motor to generate electricity, and the generated electrical energy is supplied to a rear drive motor to drive the vehicle.

When the vehicle is driving or starting on a low-adhesion road surface in the series mode, such as a muddy road section, a soft soil road, or a road covered with thick snow, a phenomenon of a rear wheel spin may occur, potentially rendering the vehicle stuck.

### SUMMARY

The present application provides a control method and a device for a vehicle with a hybrid power, a storage medium and a vehicle to solve a problem that the vehicle is prone to rear wheel spin and becoming stuck when driving on a low-adhesion road surface in a series mode.

In order to solve the above problem, the present application adopts following technical solutions.

In a first aspect, some embodiments of the present application provide a control method for a vehicle with a hybrid power. The control method includes:
acquiring a current driving mode and a working condition information of the vehicle in a case that the vehicle is determined to be in a slipping state;
determining whether the vehicle satisfies a mode switching condition based on the working condition information; and
controlling the vehicle to switch from a series mode to an idle electric four-wheel drive mode in a case that the current driving mode is the series mode and the vehicle satisfies the mode switching condition; and in the idle electric four-wheel drive mode, a front drive motor and a rear drive motor of the vehicle are in a driving state, and an engine remains in an idle state.

In some embodiments of the present application, before the acquiring the current driving mode and the working condition information of the vehicle in the case that the vehicle is determined to be in the slipping state, the method includes:
acquiring a first speed difference between a left rear wheel and a right rear wheel and a first duration time of the first speed difference, and a second wheel speed difference between an average wheel speed of two wheels on a front axle and an average wheel speed of two wheels on a rear axle and a second duration time of the second wheel speed difference; and
determining whether the vehicle is in the slipping state based on the first speed difference and the first duration time, or based on the second wheel speed difference and the second duration time.

In some embodiments of the present application, the determining whether the vehicle is in the slipping state based on the first speed difference and the first duration time, or based on the second wheel speed difference and the second duration time, includes:
determining a first speed difference threshold, a first duration time threshold, a second speed difference threshold and a second duration time threshold based on a current steering wheel angle of the vehicle and a current slope of a position where the vehicle is located; and
determining the vehicle is in the slipping state in a case that the first speed difference is greater than the first speed difference threshold and the first duration time is greater than the first duration time threshold, or in a case that the second speed difference is greater than second speed difference threshold and the second duration time is greater than second duration time threshold.

In some embodiments of the present application, the working condition information includes a current gear position, a current vehicle speed, and a current battery level and a sustained discharge power of a power battery, the sustained discharge power represents a discharge power that the power battery is capable of continuously outputting in a preset duration time; and
the determining whether the vehicle satisfies the mode switching condition based on the working condition information includes:
acquiring a current battery temperature of the power battery, a current slope of a position where the vehicle is located and a current ambient temperature;
determining a first state of charge threshold based on the current battery temperature and the current ambient temperature, and determining a first power threshold based on the current vehicle speed and the current slope; and
determining that the vehicle satisfies the mode switching condition when the current gear position is a forward gear or a reverse gear, the current vehicle speed is less than a first vehicle speed threshold, and the current battery level is greater than the first state of charge threshold and the sustained discharge power is greater than the first power threshold.

In some embodiments of the present application, after the controlling the vehicle to switch from the series mode to the idle electric four-wheel drive mode in the case that the current driving mode is the series mode and the vehicle satisfies the mode switching condition, the method also includes:
controlling the vehicle to switch from the idle electric four-wheel drive mode to a direct drive mode when it is detected that an accelerator pedal opening of the vehicle is greater than an accelerator pedal opening threshold, and in the direct drive mode, the front drive motor, the rear drive motor, and the engine are all in a driving state.

In some embodiments of the present application, after the controlling the vehicle to switch from the series mode to the idle electric four-wheel drive mode in the case that the current driving mode is the series mode and the vehicle satisfies the mode switching condition, the method also includes:
determining whether the vehicle exits the slipping state and whether the working condition information satisfies a mode exit condition; and
controlling the vehicle to switch from the idle electric four-wheel drive mode to the series mode when it is determined that the vehicle exits the slipping state or the working condition information satisfies the mode exit condition.

In some embodiments of the present application, the determining whether the vehicle exits the slipping state includes:
determining a third speed difference threshold and a fourth speed difference threshold based on the current slope of the position where the vehicle is located and a current steering wheel angle of the vehicle; and determining a third duration time threshold and a fourth duration time threshold based on the current slope, the current steering wheel angle, a driver demand power, and the sustained discharge power of the power battery;
acquiring a third speed difference between a left rear wheel and a right rear wheel and a third duration time of the third speed difference, and a fourth wheel speed difference between an average wheel speed of two wheels on a front axle and an average wheel speed of two wheels on a rear axle and a fourth duration time of the fourth wheel speed difference; and
determining that the vehicle exits the slipping state in a case that the third speed difference is less than the third speed difference threshold and the third duration time is greater than the third duration time threshold, or in a case that a fourth speed difference is less than the fourth speed difference threshold and the fourth duration time is greater than the fourth duration time threshold.

In some embodiments of the present application, the determining the third duration time threshold and the fourth duration time threshold based on the current slope, the current steering wheel angle, the driver demand power, and the sustained discharge power of the power battery includes:
determining a first initial duration time threshold and a second initial duration time threshold based on the current slope and the current steering wheel angle;
determining a first compensation time threshold and a second compensation time threshold based on the driver demand power and the sustained discharge power of the power battery;
determining the third duration time threshold based on the first initial duration time threshold and the first compensation time threshold; and
determining the fourth duration time threshold based on the second initial duration time threshold and the second compensation time threshold.

In some embodiments of the present application, the determining whether the working condition information satisfies the mode exit condition includes:
when it is detected that the current gear position of the vehicle is not in the forward gear or the reverse gear, the current battery level is less than a second state of charge threshold, the sustained discharge power is less than a second power threshold, a total duration time that the vehicle switches from the series mode to the idle electric four-wheel drive mode exceeds a time threshold, or the current vehicle speed is greater than a second vehicle speed threshold, determining that the working condition information satisfies the mode exit condition. The second state of charge threshold is less than the first state of charge threshold, the second power threshold is less than the first power threshold, and the second vehicle speed threshold is greater than the first vehicle speed threshold.

In some embodiments of the present application, after the controlling the vehicle to switch from the idle electric four-wheel drive mode to the series mode when it is determined that the vehicle exits the slipping state or the working condition information satisfies the mode exit condition, the method also includes:
prohibiting the vehicle from switching from the series mode to the idle electric four-wheel drive mode in a preset duration time.

In a second aspect, some embodiments of the present application provide a control device for a vehicle with a hybrid power based on a same concept. The device includes:
a first acquisition module, configured to acquire a current driving mode and a working condition information of the vehicle in a case that the vehicle is determined to be in a slipping state;
a first determination module, configured to determine whether the vehicle satisfies a mode switching condition based on the working condition information; and
a second control module, configured to control the vehicle to switch from a series mode to an idle electric four-wheel drive mode in a case that the current driving mode is the series mode and the vehicle satisfies the mode switching condition; and in the idle electric four-wheel drive mode, a front drive motor and a rear drive motor of the vehicle are in a driving state, and an engine remains in an idle state.

In some embodiments of the present application, the control device for the vehicle with the hybrid power also includes:
a second acquisition module, configured to acquire a first speed difference between a left rear wheel and a right rear wheel and a first duration time of the first speed difference, and a second wheel speed difference between an average wheel speed of two wheels on a front axle and an average wheel speed of two wheels on a rear axle and a second duration time of the second wheel speed difference; and
a slipping state determination module, configured to determine whether the vehicle is in the slipping state based on the first speed difference and the first duration time, or based on the second wheel speed difference and the second duration time.

In some embodiments of the present application, the slipping state determination module includes:
a first threshold determination submodule, configured to determine a first speed difference threshold, a first duration time threshold, a second wheel speed difference threshold, and a second duration time threshold based on a current steering wheel angle of the vehicle and a current slope of a position where the vehicle is located; and
a slipping state determination submodule, configured to determine the vehicle is in the slipping state in a case that the first speed difference is greater than the first speed difference threshold and the first duration time is greater than the first duration time threshold, or in a case that the second wheel speed difference is greater than the second wheel speed difference threshold and the second duration time is greater than the second duration time threshold.

In some embodiments of the present application, the working condition information includes a current gear position, a current vehicle speed, and a current battery level and a sustained discharge power of a power battery, the sustained discharge power represents a discharge power that the power battery is capable of continuously outputting in a preset duration time; and the first determination module includes:
a first acquisition submodule, configured to acquire a current battery temperature of the power battery, a current slope of a position where the vehicle is located and a current ambient temperature;
a second threshold determination submodule, configured to determine a first state of charge threshold based on the current battery temperature and the current ambient temperature, and determine a first power threshold based on the current vehicle speed and the current slope; and
a mode switching condition determination submodule, configured to determine that the vehicle satisfies the mode switching condition when the current gear position is a forward gear or a reverse gear, the current vehicle speed is less than a first vehicle speed threshold, and the current battery level is greater than the first state of charge threshold and the sustained discharge power is greater than the first power threshold.

In some embodiments of the present application, the control device for the vehicle with the hybrid power also includes:
a third control module, configured to control the vehicle to switch from the idle electric four-wheel drive mode to a direct drive mode when it is detected that an accelerator pedal opening of the vehicle is greater than an accelerator pedal opening threshold; and in the direct drive mode, the front drive motor, the rear drive motor, and the engine are all in a driving state.

In some embodiments of the present application, the control device for a vehicle with the hybrid power also includes:
a second determination module, configured to determine whether the vehicle exits the slipping state and whether the working condition information satisfies a mode exit condition;
a fourth control module, configured to control the vehicle to switch from the idle electric four-wheel drive mode to the series mode when it is determined that vehicle exits the slipping state or the working condition information satisfies the mode exit condition.

In some embodiments of the present application, the second determination module includes:
a third threshold determination submodule, configured to determine a third speed difference threshold and a fourth speed difference threshold based on the current slope of the position where the vehicle is located and a current steering wheel angle of the vehicle; and determine a third duration time threshold and a fourth duration time threshold based on the current slope, the current steering wheel angle, a driver demand power, and the sustained discharge power of the power battery;
a second acquisition submodule, configured to acquire a third speed difference between a left rear wheel and a right rear wheel and a third duration time of the third speed difference, and a fourth wheel speed difference between an average wheel speed of two wheels on a front axle and an average wheel speed of two wheels on a rear axle and a fourth duration time of the fourth wheel speed difference; and
a non-slipping determination submodule, configured to determine that the vehicle exits the slipping state in a case that the third speed difference is less than the third speed difference threshold and the third duration time is greater than the third duration time threshold, or in a case that the fourth speed difference is less than the fourth speed difference threshold and the fourth duration time is greater than the fourth duration time threshold.

In some embodiments of the present application, the third threshold determination submodule includes:
an initial threshold determination unit, configured to determine a first initial duration time threshold and a second initial duration time threshold based on the current slope and the current steering wheel angle;
a compensation threshold determination unit, configured to determine a first compensation time threshold and a second compensation time threshold based on the driver demand power and the sustained discharge power of the power battery;
a first threshold determination unit, configured to determine the third duration time threshold based on the first initial duration time threshold and the first compensation time threshold; and
a second threshold determination unit, configured to determine the fourth duration time threshold based on the second initial duration time threshold and the second compensation time threshold.

In some embodiments of the present application, the second determination module also includes:
a mode exit condition determination submodule, configured to determine that the working condition information satisfies the mode exit condition when it is detected that the current gear position of the vehicle is not in the forward gear or the reverse gear, the current battery level is less than a second state of charge threshold, the sustained discharge power is less than a second power threshold, a total duration time that the vehicle switches from the series mode to the idle electric four-wheel drive mode exceeds a time threshold, or the current vehicle speed is greater than a second vehicle speed threshold. The second state of charge threshold is less than the first state of charge threshold, the second power threshold is less than the first power threshold, and the second vehicle speed threshold is greater than the first vehicle speed threshold.

In some embodiments of the present application, the control device for the vehicle with the hybrid power also includes:
a prohibition module, configured to prohibit the vehicle from switching from the series mode to the idle electric four-wheel drive mode in a preset duration time after the controlling the vehicle to switch from the idle electric four-wheel drive mode to the series mode when it is determined that the vehicle exits the slipping state or the working condition information satisfies the mode exit condition.

In a third aspect, some embodiments of the present application provide a storage medium based on the same concept. The storage medium stores a machine-executable instruction. When the machine-executable instruction is executed by a processor, the control method for the vehicle with the hybrid power according to the first aspect of the present application is implemented.

In a fourth aspect, some embodiments of the present application provide a vehicle based on the same concept. The vehicle includes a processor and a memory. The memory stores a machine-executable instruction being capable of be executed by the processor, and the processor is configured to execute the machine-executable instruction to implement the control method for the vehicle with the hybrid power according to the first aspect of the present application.

Compared with the conventional technologies, the present application includes following advantages.

Some embodiments of the present application provide a control method for a vehicle with a hybrid power, which includes: acquiring a current driving mode and a working condition information of the vehicle in a case that the vehicle is determined to be in a slipping state; determining whether the vehicle satisfies a mode switching condition based on the working condition information; and controlling the vehicle to switch from a series mode to an idle electric four-wheel drive mode in a case that the current driving mode is the series mode and the vehicle satisfies the mode switching condition. According to some embodiments of the present application, when the vehicle slips while driving on a low-adhesion road surface in the series mode, the vehicle will be switched from the series mode to the idle electric four-wheel drive mode, so that escape performance of the vehicle is improved, thereby intelligent escape of the vehicle is realized. Moreover, since an engine remains in an idle state in the idle electric four-wheel drive mode, the vehicle is capable of quickly switching back to the series mode after escaping from being stuck, thereby repeated start-stop operations of the engine are avoided, and thus driving performance of the vehicle on the low-adhesion road surface is effectively improved

### BRIEF DESCRIPTION OF THE DRAWINGS

FIG. 1 is a schematic structural diagram of a vehicle with a hybrid power provided by some embodiments of the present application.
FIG. 2 is a flowchart of steps of a starting control method for a vehicle with a hybrid power provided by some embodiments of the present application.
FIG. 3 is a schematic diagram of a functional module of a starting control device for a vehicle with a hybrid power provided by some embodiments of the present application.
FIG. 4 is a schematic structural diagram of a vehicle provided by some embodiments of the present application.

### DETAILED DESCRIPTION OF THE EMBODIMENTS

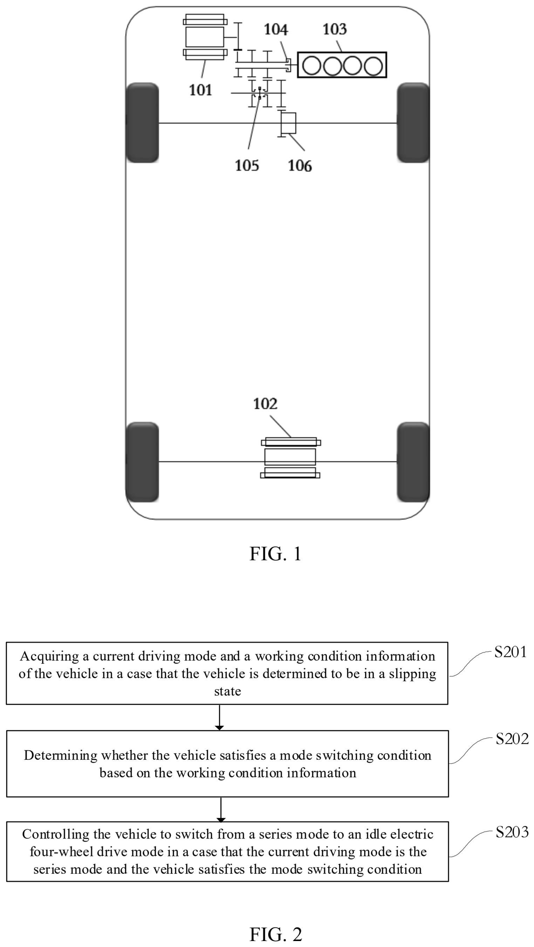

With reference to FIG. 1, a schematic structural diagram of a vehicle with a hybrid power in some embodiments of the present application is shown. The vehicle with the hybrid power includes a front drive motor 101, a rear drive motor 102, an engine 103, a clutch 104, a synchronizer 105 and a differential 106. The front drive motor 101 is connected to an end of an input shaft, the other end of the input shaft is connected to the engine 103 via the clutch 104, the input shaft is connected to an output shaft via a gear set, and a transmission gear meshing with the differential 106 is connected to the output shaft. The synchronizer 105 is connected to the gear set, and is used for synchronizing gear rotational speeds between different gears. The rear drive motor 102 is disposed on a rear axle and is used for providing power to a rear wheel via a rear drive shaft to drive the vehicle.

The vehicle with the hybrid power adopting the above architecture is simultaneously equipped with the front drive motor 101, the rear drive motor 102 and the engine 103. Therefore, to adapt to different road conditions and driving demands, a plurality of driving modes is typically provided, including a series mode and a pure electric four-wheel drive mode. Among them, in the pure electric four-wheel drive mode, the engine 103 is shut off, the clutch 104 is disengaged, and the synchronizer 105 is shifted into gear, so that the vehicle is collectively driven by the front drive motor 101 and the rear drive motor 102. In the series mode, the engine 103 operates, the clutch 104 is engaged, and the synchronizer 105 is in neutral, so that the engine 103 drives the front drive motor 101 to generate electricity via the clutch 104, and the generated electricity energy is then supplied to the rear drive motor 102 to drive the vehicle.

Since the vehicle primarily relies on rear-wheel drive in the series mode, phenomena of the rear wheel spin may occur, potentially rendering the vehicle stuck when driving or starting on a low-adhesion road surface in the series mode, such as a muddy road section, a soft soil road, or a road covered with thick snow.

In view of defects in the above background technologies, the present application aims to provide a control method for a vehicle with a hybrid power. According to the control method, when the vehicle slips while driving on a low-adhesion road surface in the series mode, the vehicle will be switched from the series mode to the idle electric four-wheel drive mode, so that escape performance of the vehicle is enhanced. At the same time, by controlling the engine to remain in an idle state in the idle electric four-wheel drive mode, the vehicle is capable of quickly switching back to the series mode after escaping from being stuck, thereby repeated start-stop operations of the engine are avoided, and thus driving performance of the vehicle on the low-adhesion road surface is effectively improved.

With reference to FIG. 2, a control method for a vehicle with a hybrid power is provided by the present application, and the method may include following steps:
S201: acquiring a current driving mode and a working condition information of the vehicle in a case that the vehicle is determined to be in a slipping state.

It should be noted that an executing entity in some embodiments of the present application may be a computing service device with functions of data processing, network communication, and program operation, or an electronic device having the above functions, such as a trip computer, or an on board computer, or the like, for example, an electronic control unit (ECU), a body control module (BCM), or a vehicle control unit (VCU), or the like. The present embodiment will take the VCU as the executing entity for illustration. It should be noted that the executing entity of the vehicle is not specifically limited by some implementations of the present application.

In some implementations of the present application, the VCU is capable of monitoring wheel speeds of four wheels of the vehicle. When it is detected that a speed difference between a left rear wheel and a right rear wheel, or a wheel speed difference between an average wheel speed of two wheels on a front axle and an average wheel speed of two wheels on a rear axle is greater than a calibration value, it is determined that the vehicle is in the slipping state. In this case, the vehicle is generally driving on a slippery road or is stuck in a muddy road section.

In some implementations of the present application, after determining that the vehicle is in the slipping state, a current driving mode of the vehicle will be acquired by the VCU to determine whether the current driving mode is a series mode that relies on rear wheels for driving, and working condition information of the vehicle will be simultaneously acquired to determine whether the current vehicle satisfies a mode switching condition.

S202: determining whether the vehicle satisfies the mode switching condition based on the working condition information.

In some implementations of the present application, after the VCU determines that the current driving mode is the series mode that relies on the rear wheels for driving, it is preliminarily considered that a driving mode of the vehicle satisfies the mode switching condition. To improve safety of mode switching, it is also necessary to consider whether the current working condition information of the vehicle satisfies the mode switching condition.

Specifically, the working condition information may include a current gear position, a current vehicle speed, and a current battery level and a sustained discharge power of a power battery. By detecting the current vehicle speed, the mode switching in a high-speed scenario, which affects driving safety of the vehicle, may be avoided. By detecting the current battery level and the sustained discharge power of the power battery, it may be determined whether the power battery of the vehicle has sufficient power and discharge power to support a mode switching process.

S203: controlling the vehicle to switch from the series mode to an idle electric four-wheel drive mode in a case that the current driving mode is the series mode and the vehicle satisfies the mode switching condition.

It should be noted that in the idle electric four-wheel drive mode, the synchronizer is engaged, a front drive motor and a rear drive motor of the vehicle are in a driving state, the engine remains in an idle state, and the clutch is disengaged. In this mode, the vehicle is driven forward by the front drive motor and the rear drive motor, and the engine remains in the idle state without outputting a torque.

In some implementations of the present application, considering that the vehicle is usually capable of completing escape in a short time when driven by the front drive motor and the rear drive motor together, therefore, after the mode switching is performed, the engine is controlled to remain in the idle state. In this way, the vehicle is capable of quickly and automatically switching back to the original series mode without restarting the engine after escaping from being stuck.

In some implementations of the present application, the idle electric four-wheel drive mode is developed based on a pure electric four-wheel drive mode. On one hand, in the idle electric four-wheel drive mode, both the front drive motor and the rear drive motor are in the driving state, which is capable of providing better ground adhesion and effectively assisting the vehicle in escaping from being stuck; and on the other hand, compared to a traditional pure electric four-wheel drive mode where the engine needs to remain in a flameout state, the engine remains in the idle state in the idle electric four-wheel drive mode. In this way, the vehicle is capable of quickly switching back to the series mode after escaping from being stuck, so that repeated start-stop operations of the engine are avoided, thereby driving performance of the vehicle on a low-adhesion road surface is effectively improved, and thus a better driving experience is provided to a driver.

In some feasible implementations of the present application, before the step S201, the control method for the vehicle with the hybrid power may also include following steps:
S101: acquiring a first speed difference between the left rear wheel and the right rear wheel and a first duration time of the first speed difference, and a second wheel speed difference between an average wheel speed of two wheels on the front axle and an average wheel speed of two wheels on the rear axle and a second duration time of the second wheel speed difference.

In some implementations of the present application, by detecting the first speed difference between the left rear wheel and the right rear wheel, it is determined whether a slipping phenomenon exists between the left rear wheel and the right rear wheel of the vehicle; by detecting the second wheel speed difference between the average wheel speed of the two wheels on the front axle and the average wheel speed of the two wheels on the rear axle, it is determined whether a slipping phenomenon exists between the front wheel and the rear wheel of the vehicle. At the same time, by detecting the duration time of the slipping phenomenon, a brief slipping phenomenon that occurs during driving of the vehicle may be disregarded, thereby avoiding frequent switching of the driving mode.

S102: determining whether the vehicle is in the slipping state based on the first speed difference and the first duration time, or based on the second wheel speed difference and second duration time.

In some implementations of the present application, considering that in different road conditions, there may be normal speed differences between wheels of the vehicle. For instance, when the vehicle is driving to a left turn lane, in a normal condition, a speed of a left wheel is less than a speed of a right wheel. If a fixed speed difference threshold and a fixed duration time threshold are used for determining whether a wheel is in the slipping state, a misjudgment may occur. Therefore, the VCU will also acquire a current steering wheel angle of the vehicle and a current slope of a position where the vehicle is located to correct the speed difference threshold and the duration time threshold. Specifically, the greater the current steering wheel angle and the smaller the current slope, the greater a corresponding speed difference threshold and a corresponding duration time threshold.

In practical implementations, a first mapping relationship among a first speed difference threshold, the current steering wheel angle, and the current slope may be constructed; a second mapping relationship among a first duration time threshold, the current steering wheel angle, and the current slope may be constructed; a third mapping relationship among a second speed difference threshold, the current steering wheel angle, and the current slope may be constructed; and a fourth mapping relationship among a second duration time threshold, the current steering wheel angle, and the current slope may be constructed.

Exemplarily, with reference to table 1 to table 4, examples of tables corresponding to the first mapping relationship, the second mapping relationship, the third mapping relationship, and the fourth mapping relationship are shown, respectively.

**Table 1: Table of correspondence relationships among the first speed difference threshold, the steering wheel angle and the current slope**

| First speed difference threshold (rpm) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 40 | 40 | 40 | 60 | 60 | 60 | 60 | 60 | 60 |
| | 5 | 40 | 40 | 40 | 40 | 60 | 60 | 60 | 60 | 60 |
| | 10 | 40 | 40 | 40 | 40 | 40 | 60 | 60 | 60 | 60 |
| | 15 | 40 | 40 | 40 | 40 | 40 | 60 | 60 | 60 | 60 |
| | 20 | 30 | 30 | 40 | 40 | 40 | 40 | 60 | 60 | 60 |
| | 25 | 30 | 30 | 40 | 40 | 40 | 40 | 60 | 60 | 60 |
| | 30 | 30 | 30 | 30 | 30 | 40 | 40 | 40 | 40 | 40 |
| | >30 | 30 | 30 | 30 | 30 | 40 | 40 | 40 | 40 | 40 |

**Table 2: Table of correspondence relationships among the first duration time threshold, the steering wheel angle and the current slope**

| First duration time threshold (s) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 0.6 | 0.6 | 0.6 | 0.7 | 0.7 | 0.7 | 0.7 | 0.7 | 0.7 |
| | 5 | 0.6 | 0.6 | 0.6 | 0.7 | 0.7 | 0.7 | 0.7 | 0.7 | 0.7 |
| | 10 | 0.6 | 0.6 | 0.6 | 0.7 | 0.7 | 0.7 | 0.7 | 0.7 | 0.7 |
| | 15 | 0.6 | 0.6 | 0.6 | 0.7 | 0.7 | 0.7 | 0.7 | 0.7 | 0.7 |
| | 20 | 0.4 | 0.4 | 0.4 | 0.4 | 0.4 | 0.7 | 0.7 | 0.7 | 0.7 |
| | 25 | 0.4 | 0.4 | 0.4 | 0.4 | 0.4 | 0.7 | 0.7 | 0.7 | 0.7 |
| | 30 | 0.4 | 0.4 | 0.4 | 0.4 | 0.4 | 0.7 | 0.7 | 0.7 | 0.7 |
| | >30 | 0.4 | 0.4 | 0.4 | 0.4 | 0.4 | 0.7 | 0.7 | 0.7 | 0.7 |

**Table 3: Table of correspondence relationships among the second speed difference threshold, the steering wheel angle and the current slope**

| Second speed difference threshold (rpm) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 40 | 40 | 40 | 60 | 60 | 60 | 60 | 60 | 60 |
| | 5 | 40 | 40 | 40 | 40 | 60 | 60 | 60 | 60 | 60 |
| | 10 | 40 | 40 | 40 | 40 | 40 | 60 | 60 | 60 | 60 |
| | 15 | 40 | 40 | 40 | 40 | 40 | 60 | 60 | 60 | 60 |
| | 20 | 30 | 30 | 40 | 40 | 40 | 40 | 60 | 60 | 60 |
| | 25 | 30 | 30 | 40 | 40 | 40 | 40 | 60 | 60 | 60 |
| | 30 | 30 | 30 | 30 | 30 | 40 | 40 | 40 | 40 | 40 |
| | >30 | 30 | 30 | 30 | 30 | 40 | 40 | 40 | 40 | 40 |

**Table 4: Table of correspondence relationships among the second duration time threshold, the steering wheel angle and the current slope**

| Second duration time threshold (s) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 0.6 | 0.6 | 0.6 | 0.7 | 0.7 | 0.7 | 0.7 | 0.7 | 0.7 |
| | 5 | 0.6 | 0.6 | 0.6 | 0.7 | 0.7 | 0.7 | 0.7 | 0.7 | 0.7 |
| | 10 | 0.6 | 0.6 | 0.6 | 0.7 | 0.7 | 0.7 | 0.7 | 0.7 | 0.7 |
| | 15 | 0.6 | 0.6 | 0.6 | 0.7 | 0.7 | 0.7 | 0.7 | 0.7 | 0.7 |
| | 20 | 0.4 | 0.4 | 0.4 | 0.4 | 0.4 | 0.7 | 0.7 | 0.7 | 0.7 |
| | 25 | 0.4 | 0.4 | 0.4 | 0.4 | 0.4 | 0.7 | 0.7 | 0.7 | 0.7 |
| | 30 | 0.4 | 0.4 | 0.4 | 0.4 | 0.4 | 0.7 | 0.7 | 0.7 | 0.7 |
| | >30 | 0.4 | 0.4 | 0.4 | 0.4 | 0.4 | 0.7 | 0.7 | 0.7 | 0.7 |

In some implementations, the first speed difference threshold, the first duration time threshold, the second speed difference threshold, and the second duration time threshold corresponding to the current steering wheel angle and the current slope may be obtained by looking up a table. Thereafter, in a case that the first speed difference is greater than the first speed difference threshold and the first duration time is greater than the first duration time threshold, or in a case that the second wheel speed difference is greater than the second wheel speed difference threshold and the second duration time is greater than the second duration time threshold, it is determined that the vehicle is in the slipping state.

In some implementations, by correcting the speed difference threshold and the duration time threshold based on the current steering wheel angle and the current slope of the position where the vehicle is located, a more accurate determination may be made as to whether the vehicle is in the slipping state.

In some feasible implementations, the working condition information includes the current gear position, the current vehicle speed, and the current battery level and the sustained discharge power of the power battery, among them, the sustained discharge power represents a discharge power that the power battery is capable of continuously outputting in a preset duration time. S202 may specifically include following sub-steps:
S202-1: acquiring a current battery temperature of the power battery, the current slope of the position where the vehicle is located and a current ambient temperature.

In some implementations, considering that the current battery level of the power battery is related to the current battery temperature of the power battery and the current ambient temperature, and that the sustained discharge power of the power battery is related to the current vehicle speed and the current slope of the position where the vehicle is located, therefore, the VCU will also acquire the current battery temperature of the power battery, the current slope of the position where the vehicle is located and the current ambient temperature to correct a first state of charge threshold and a first power threshold, to more accurately determine whether the working condition information of the vehicle satisfies the mode switching condition.

S202-2: determining the first state of charge threshold based on the current battery temperature and the current ambient temperature; and determining the first power threshold based on the current vehicle speed and the current slope.

Regarding the first state of charge threshold, considering that state of charge of the power battery generally varies with temperature, for example, the lower the temperature, the more the state of charge of the power battery decays. Therefore, in some implementations, the lower the current battery temperature and the current ambient temperature, the greater a corresponding first state of charge threshold, thereby sufficient charge for the vehicle is retained in a low-temperature environment.

Regarding the first power threshold, considering that during a normal driving, the higher the current vehicle speed and the greater the current slope, the greater an actual sustained discharge power of the power battery, therefore, in some implementations, the higher the current vehicle speed and the greater the current slope, the greater a corresponding first power threshold. In this way, it is ensured that the vehicle is capable of smoothly switching from the series mode to the idle electric four-wheel drive mode in a scenario with higher speed and a steeper slope.

S202-3: determining that the vehicle satisfies the mode switching condition when the current gear position is a forward gear or a reverse gear, the current vehicle speed is less than a first vehicle speed threshold, and the current battery level is greater than the first state of charge threshold and the sustained discharge power is greater than the first power threshold.

In some implementations, the sustained discharge power may be defined as a 10 seconds discharge power of a high-voltage battery, that is, a discharge power that the power battery is capable of continuously outputting in 10 seconds.

In some implementations, when the current gear position, the current vehicle speed, the current battery level and the sustained discharge power of the power battery of the vehicle all satisfy their respective switching conditions, it is considered that the vehicle satisfies the mode switching condition. In this case, the VCU will activate a series escape function and control the vehicle to switch from the series mode to the idle electric four-wheel drive mode.

In some feasible implementations, after S203, the control method for the vehicle with the hybrid power may also include following steps:

S204: controlling the vehicle to switch from the idle electric four-wheel drive mode to a direct drive mode when it is detected that an accelerator pedal opening of the vehicle is greater than an accelerator pedal opening threshold; and in the direct drive mode, the front drive motor, the rear drive motor, and the engine are all in the driving state.

In some implementations, the idle electric four-wheel drive mode may also be switched to the direct drive mode in a special circumstance. For instance, when the accelerator pedal opening of the vehicle is greater than the accelerator pedal opening threshold, it indicates that the driver is pressing an accelerator deeply. In this case, to provide stronger power to the vehicle, the VCU will control the vehicle to switch from the idle electric four-wheel drive mode to the direct drive mode. When in the direct drive mode, the vehicle will be collectively driven by the engine, the front drive motor and the rear drive motor.

In practical implementations, when it is detected that the accelerator pedal opening of the vehicle is greater than the accelerator pedal opening threshold, the VCU will send a clutch engagement command to a transmission controller, so that the transmission controller controls the clutch to engage in responds to the clutch engagement command. The VCU sends a torque control request to an engine controller after detecting that the clutch is engaged, so that the engine controller controls the engine to output a torque in responds to the torque control request.

In some implementations, since the engine has already been pre-started in the idle electric four-wheel drive mode, the engine is capable of directly outputting the torque via the clutch by controlling the clutch to engage to cooperate with the front drive motor and the rear drive motor to collectively drive the vehicle. Therefore, not only better acceleration performance and faster power response is achieved, but also the mode switching process is more smooth and rapid.

In some feasible implementations, after S203, the control method for the vehicle with the hybrid power may also include following steps:
S205: determining whether the vehicle exits the slipping state and whether the working condition information satisfies a mode exit condition.

S206: controlling the vehicle to switch from the idle electric four-wheel drive mode to the series mode when it is determined that vehicle exits the slipping state or the working condition information satisfies the mode exit condition.

In some implementations, the vehicle generally completes escape from being stuck in a short time after entering the idle electric four-wheel drive mode. Therefore, the VCU will continuously detect whether the vehicle has exited the slipping state and whether the working condition information satisfies the mode exit condition. Upon detecting that the vehicle has exited the slipping state or the working condition information satisfies the mode exit condition, the vehicle is switched back to the original series mode, so that intelligent switching of the driving mode from the series mode to the idle electric four-wheel drive mode and then back to the series mode is realized. The entire process does not require user intervention, thereby driving smoothness is improved.

In some feasible implementations, the determining whether the vehicle exits the slipping state in S205 may specifically include following sub-steps:
S205-1: determining a third speed difference threshold and a fourth speed difference threshold based on the current slope of the position where the vehicle is located and the current steering wheel angle of the vehicle; and determining a third duration time threshold and a fourth duration time threshold based on the current slope, the current steering wheel angle, a driver demand power, and the sustained discharge power of the power battery.

In some implementations, the VCU performs correction on the speed difference threshold by acquiring the current steering wheel angle of the vehicle and the current slope of the position where the vehicle is located. It should be noted that the third speed difference threshold is less than the first speed difference threshold, and the fourth speed difference threshold is less than the second speed difference threshold. Therefore, compared to the control based on the first speed difference threshold and the second speed difference threshold, by setting the stricter third speed difference threshold and the fourth speed difference threshold, it is ensured that the vehicle is prevented from being repeatedly switched between the series mode and the idle electric four-wheel drive mode when the speed difference between wheels frequently fluctuates, thereby avoiding affecting the driving experience and unnecessary burden on the vehicle.

In some implementations, the VCU performs the correction on the duration time threshold by acquiring the current slope, the current steering wheel angle, the driver demand power, and the sustained discharge power of the power battery. Compared to the control based on the first duration time threshold and second duration time threshold, the third speed difference threshold and the fourth speed difference threshold may be more reasonable by further considering the impact of the driver demand power and the sustained discharge power of the power battery on the basis of considering the current slope and the current steering wheel angle.

In practical implementations, regarding the third speed difference threshold and the fourth speed difference threshold, a first initial duration time threshold and a second initial duration time threshold are firstly determined based on the current slope and the current steering wheel angle; then a first compensation time threshold and a second compensation time threshold are determined based on the driver demand power and the sustained discharge power of the power battery; and finally, the third duration time threshold is determined based on the first initial duration time threshold and the first compensation time threshold, and the fourth duration time threshold is determined based on the second initial duration time threshold and the second compensation time threshold.

It should be noted that, the driver demand power represents a demand power demanded by the driver through an accelerator pedal. The greater a travel distance of the accelerator pedal pressed by the driver, the higher a corresponding driver demand power.

In some implementations, the smaller a difference between the driver demand power and the sustained discharge power of the power battery, the more the power battery is capable of satisfying the driver demand power. In this case, a corresponding first compensation time threshold and a corresponding second compensation time threshold are larger, resulting in a larger third duration time threshold and a larger fourth duration time threshold that are ultimately acquired. Thus, the vehicle has sufficient time to perform escape from being stuck when the power battery has sufficient power.

In practical implementations, a fifth mapping relationship among the third speed difference threshold, the current steering wheel angle and the current slope may be constructed; a sixth mapping relationship among the first initial duration time threshold, the current steering wheel angle and the current slope may be constructed; a seventh mapping relationship between the first compensation time threshold and a first power difference between the driver demand power and the sustained discharge power of the power battery may be constructed; an eighth mapping relationship among the fourth wheel speed difference threshold, the current steering wheel angle and the current slope may be constructed; a ninth mapping relationship among the second initial duration time threshold, the current steering wheel angle and the current slope may be constructed; and a tenth mapping relationship between the second compensation time threshold and a second power difference between the driver demand power and the sustained discharge power of the power battery may be constructed.

Exemplarily, with reference to table 5 to table 10, table examples corresponding to the fifth mapping relationship to the tenth mapping relationship are shown, respectively.

**Table 5: Table of correspondence relationships among the third speed difference threshold, the current steering wheel angle and the current slope**

| Third speed difference threshold (rpm) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 35 | 35 | 35 | 55 | 55 | 55 | 55 | 55 | 55 |
| | 5 | 35 | 35 | 35 | 35 | 55 | 55 | 55 | 55 | 55 |
| | 10 | 35 | 35 | 35 | 35 | 35 | 55 | 55 | 55 | 55 |
| | 15 | 35 | 35 | 35 | 35 | 35 | 55 | 55 | 55 | 55 |
| | 20 | 25 | 25 | 35 | 35 | 35 | 35 | 55 | 55 | 55 |
| | 25 | 25 | 25 | 35 | 35 | 35 | 35 | 55 | 55 | 55 |
| | 30 | 25 | 25 | 25 | 25 | 35 | 35 | 35 | 35 | 35 |
| | >30 | 25 | 25 | 25 | 25 | 35 | 35 | 35 | 35 | 35 |

**Table 6: Table of correspondence relationships among the first initial duration time threshold, the current steering wheel angle and the current slope**

| First initial duration time threshold (s) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 0.6 | 0.6 | 0.6 | 0.7 | 0.7 | 0.7 | 0.7 | 0.7 | 0.7 |
| | 5 | 0.6 | 0.6 | 0.6 | 0.7 | 0.7 | 0.7 | 0.7 | 0.7 | 0.7 |
| | 10 | 0.6 | 0.6 | 0.6 | 0.7 | 0.7 | 0.7 | 0.7 | 0.7 | 0.7 |
| | 15 | 0.6 | 0.6 | 0.6 | 0.7 | 0.7 | 0.7 | 0.7 | 0.7 | 0.7 |
| | 20 | 0.7 | 0.7 | 0.7 | 0.8 | 0.8 | 0.8 | 0.8 | 0.8 | 0.8 |
| | 25 | 0.7 | 0.7 | 0.7 | 0.8 | 0.8 | 0.8 | 0.8 | 0.8 | 0.8 |
| | 30 | 0.7 | 0.7 | 0.7 | 0.8 | 0.8 | 0.8 | 0.8 | 0.8 | 0.8 |
| | >30 | 0.7 | 0.7 | 0.7 | 0.8 | 0.8 | 0.8 | 0.8 | 0.8 | 0.8 |

**Table 7: Table of a correspondence relationship between the first compensation time threshold and the first power difference**

| | First power difference (Kw) | | | | | | | |
|---|---|---|---|---|---|---|---|---|
| | <5 | 10 | 20 | 30 | 40 | 50 | 60 | >60 |
| First compensation time threshold (s) | 1 | 0.9 | 0.8 | 0.7 | 0.6 | 0.5 | 0.3 | 0 |

**Table 8: Table of correspondence relationships among the fourth wheel speed difference threshold, the current steering wheel angle and the current slope**

| Fourth wheel speed difference threshold (rpm) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 35 | 35 | 35 | 55 | 55 | 55 | 55 | 55 | 55 |
| | 5 | 35 | 35 | 35 | 35 | 55 | 55 | 55 | 55 | 55 |
| | 10 | 35 | 35 | 35 | 35 | 35 | 55 | 55 | 55 | 55 |
| | 15 | 35 | 35 | 35 | 35 | 35 | 35 | 55 | 55 | 55 |
| | 20 | 25 | 25 | 35 | 35 | 35 | 35 | 55 | 55 | 55 |
| | 25 | 25 | 25 | 35 | 35 | 35 | 35 | 55 | 55 | 55 |
| | 30 | 25 | 25 | 25 | 25 | 35 | 35 | 30 | 35 | 35 |
| | >30 | 25 | 25 | 25 | 25 | 30 | 30 | 30 | 35 | 35 |

**Table 9: Table of correspondence relationships among the second initial duration time threshold, the current steering wheel angle and the current slope**

| Second initial duration time threshold (s) | | Steering wheel angle (deg) | | | | | | | | |
|---|---|---|---|---|---|---|---|---|---|---|
| | | <10 | 10 | 15 | 20 | 25 | 30 | 35 | 40 | >40 |
| Current slope (%) | <5 | 0.6 | 0.6 | 0.6 | 0.7 | 0.7 | 0.7 | 0.7 | 0.7 | 0.7 |
| | 5 | 0.6 | 0.6 | 0.6 | 0.7 | 0.7 | 0.7 | 0.7 | 0.7 | 0.7 |
| | 10 | 0.6 | 0.6 | 0.6 | 0.7 | 0.7 | 0.7 | 0.7 | 0.7 | 0.7 |
| | 15 | 0.6 | 0.6 | 0.6 | 0.7 | 0.7 | 0.7 | 0.7 | 0.7 | 0.7 |
| | 20 | 0.7 | 0.7 | 0.7 | 0.8 | 0.8 | 0.8 | 0.8 | 0.8 | 0.8 |
| | 25 | 0.7 | 0.7 | 0.7 | 0.8 | 0.8 | 0.8 | 0.8 | 0.8 | 0.8 |
| | 30 | 0.7 | 0.7 | 0.7 | 0.8 | 0.8 | 0.8 | 0.8 | 0.8 | 0.8 |
| | >30 | 0.7 | 0.7 | 0.7 | 0.8 | 0.8 | 0.8 | 0.8 | 0.8 | 0.8 |

**Table 10: Table of a correspondence relationship between the second compensation time threshold and the second power difference**

| | Second power difference (Kw) | | | | | | | |
|---|---|---|---|---|---|---|---|---|
| | <5 | 10 | 20 | 30 | 40 | 50 | 60 | >60 |
| Second compensation time threshold (s) | 1 | 0.9 | 0.8 | 0.7 | 0.6 | 0.5 | 0.3 | 0 |

S205-2: acquiring a third speed difference between a left rear wheel and a right rear wheel and a third duration time of the third speed difference, and a fourth wheel speed difference between an average wheel speed of two wheels on the front axle and an average wheel speed of two wheels on the rear axle and a fourth duration time of the fourth wheel speed difference.

S205-3: determining that the vehicle exits the slipping state in a case that the third speed difference is less than the third speed difference threshold and the third duration time is greater than the third duration time threshold, or in a case that the fourth speed difference is less than the fourth speed difference threshold and the fourth duration time is greater than the fourth duration time threshold.

In some implementations, the third speed difference threshold, the third duration time threshold, the fourth speed difference threshold, and the fourth duration time threshold that better match a current actual road condition and a current actual working condition of the vehicle may be calculated by looking up a table, thereby a more accurate and effective determination of whether the vehicle has exited the slipping state is realized, and thus avoiding frequent switching between the idle electric four-wheel drive mode and the series mode.

In some feasible implementations, the determining whether the working condition information satisfies the mode exit condition in S205 may specifically include following sub-steps:
S205-1: when it is detected that the current gear position of the vehicle is not in the forward gear or the reverse gear, the current battery level is less than a second state of charge threshold, the sustained discharge power is less than a second power threshold, a total duration time that the vehicle switches from the series mode to the idle electric four-wheel drive mode exceeds a time threshold, or the current vehicle speed is greater than a second vehicle speed threshold, determining that the working condition information satisfies the mode exit condition.

In some implementations, considering normal power consumption of the vehicle during an escape process, the second state of charge threshold will be set less than the first state of charge threshold, and the second power threshold will be set less than the first power threshold, so that the vehicle has sufficient power to perform the escape process in the idle electric four-wheel drive mode. By recording the total duration time that the vehicle switches from the series mode to the idle electric four-wheel drive mode, the vehicle performs the escape process for an extended period may be avoided, which would cause a significant burden on the vehicle. At the same time, the second wheel speed threshold will be set greater than the first speed threshold, so that the vehicle is capable of exiting the mode exit condition after accelerating to a higher speed, preventing the driving mode from being frequently switched between the idle electric four-wheel drive mode and the series mode due to speed fluctuations of the vehicle on the muddy road section.

In some feasible implementations, after S206, the control method for the vehicle with the hybrid power may also include following steps:
S207: prohibiting the vehicle from switching from the series mode to the idle electric four-wheel drive mode in a preset duration time.

In some implementations, the preset duration time may be set to 3 seconds, that is, after the vehicle is controlled to switch from the idle electric four-wheel drive mode to the series mode when it is determined that the vehicle has exited the slipping state or the working condition information satisfies the mode exit condition, even if it is detected that the vehicle satisfies the mode switching condition for switching from the series mode to the idle electric four-wheel drive mode, the vehicle will be prohibited from switching in 3 seconds. In this way, frequent switching of the driving mode between the idle electric four-wheel drive mode and the series mode may be avoided, which would cause unnecessary burdens on the vehicle and affect driving experience of a user.

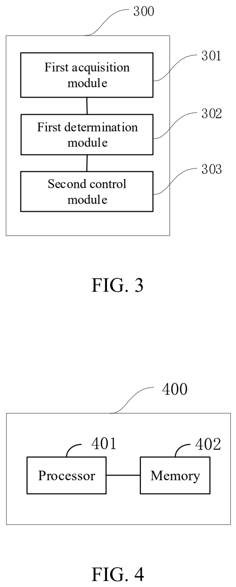

In a second aspect, based on a same concept, with reference to FIG. 3, some embodiments of the present application provide a control device 300 for a vehicle with a hybrid power, and the control device 300 for the vehicle with the hybrid power includes:
a first acquisition module 301, configured to acquire a current driving mode and a working condition information of the vehicle in a case that the vehicle is determined to be in a slipping state;
a first determination module 302, configured to determine whether the vehicle satisfies a mode switching condition based on the working condition information;
a second control module 303, configured to control the vehicle to switch from a series mode to an idle electric four-wheel drive mode in a case that the current driving mode is the series mode and the vehicle satisfies the mode switching condition; and in the idle electric four-wheel drive mode, a front drive motor and a rear drive motor of the vehicle are in a driving state, and an engine remains in an idle state.

In some embodiments of the present application, the control device 300 for the vehicle with the hybrid power also includes:
a second acquisition module, configured to acquire a first speed difference between a left rear wheel and a right rear wheel and a first duration time of the first speed difference, and a second wheel speed difference between an average wheel speed of two wheels on a front axle and an average wheel speed of two wheels on a rear axle and a second duration time of the second wheel speed difference;
a slipping state determination module, configured to determine whether the vehicle is in the slipping state based on the first speed difference and the first duration time, or based on the second wheel speed difference and the second duration time.

In some embodiments of the present application, the slipping state determination module includes:
a first threshold determination submodule, configured to determine a first speed difference threshold, a first duration time threshold, a second wheel speed difference threshold, and a second duration time threshold based on a current steering wheel angle of the vehicle and a current slope of a position where the vehicle is located; and
a slipping state determination submodule, configured to determine the vehicle is in the slipping state in a case that the first speed difference is greater than the first speed difference threshold and the first duration time is greater than the first duration time threshold, or in a case that the second wheel speed difference is greater than the second wheel speed difference threshold and the second duration time is greater than second duration time threshold.

In some embodiments of the present application, the working condition information includes a current gear position, a current vehicle speed, and a current battery level and a sustained discharge power of a power battery, the sustained discharge power represents a discharge power that the power battery is capable of continuously outputting in a preset duration time, and the first determination module 302 includes:
a first acquisition submodule, configured to acquire a current battery temperature of the power battery, a current slope of a position where the vehicle is located and a current ambient temperature;
a second threshold determination submodule, configured to determine a first state of charge threshold based on the current battery temperature and the current ambient temperature, and determine a first power threshold based on the current vehicle speed and the current slope; and
a mode switching condition determination submodule, configured to determine that the vehicle satisfies the mode switching condition when the current gear position is a forward gear or a reverse gear, the current vehicle speed is less than a first vehicle speed threshold, and the current battery level is greater than the first state of charge threshold and the sustained discharge power is greater than the first power threshold.

In some embodiments of the present application, the control device 300 for the vehicle with the hybrid power also includes:
a third control module, configured to control the vehicle to switch from the idle electric four-wheel drive mode to a direct drive mode when it is detected that an accelerator pedal opening of the vehicle is greater than an accelerator pedal opening threshold; and in the direct drive mode, the front drive motor, the rear drive motor, and the engine are all in a driving state.

In some embodiments of the present application, the control device 300 for the vehicle with the hybrid power also includes:
a second determination module, configured to determine whether the vehicle exits the slipping state and whether the working condition information satisfies a mode exit condition;
a fourth control module, configured to control the vehicle to switch from the idle electric four-wheel drive mode to the series mode when it is determined that vehicle exits the slipping state or the working condition information satisfies the mode exit condition.

In some embodiments of the present application, the second determination module includes:
a third threshold determination submodule, configured to determine a third speed difference threshold and a fourth speed difference threshold based on the current slope of the position where the vehicle is located and a current steering wheel angle of the vehicle, and determine a third duration time threshold and a fourth duration time threshold based on the current slope, the current steering wheel angle, a driver demand power, and the sustained discharge power of the power battery;
a second acquisition submodule, configured to acquire a third speed difference between a left rear wheel and a right rear wheel and a third duration time of the third speed difference, and a fourth wheel speed difference between an average wheel speed of two wheels on a front axle and an average wheel speed of two wheels on a rear axle and a fourth duration time of the fourth wheel speed difference; and
a non-slipping determination submodule, configured to determine that the vehicle exits the slipping state in a case that the third speed difference is less than the third speed difference threshold and the third duration time is greater than the third duration time threshold, or in a case that the fourth speed difference is less than the fourth speed difference threshold and the fourth duration time is greater than the fourth duration time threshold.

In some embodiments of the present application, the third threshold determination submodule includes:
an initial threshold determination unit, configured to determine a first initial duration time threshold and a second initial duration time threshold based on the current slope and the current steering wheel angle;
a compensation threshold determination unit, configured to determine a first compensation time threshold and a second compensation time threshold based on the driver demand power and the sustained discharge power of the power battery;
a first threshold determination unit, configured to determine the third duration time threshold based on the first initial duration time threshold and the first compensation time threshold; and
a second threshold determination unit, configured to determine the fourth duration time threshold based on the second initial duration time threshold and the second compensation time threshold.

In some embodiments of the present application, the second determination module also includes:
a mode exit condition determination submodule, configured to determine that the working condition information satisfies the mode exit condition when it is detected that the current gear position of the vehicle is not in the forward gear or the reverse gear, the current battery level is less than a second state of charge threshold, the sustained discharge power is less than the second power threshold, a total duration time that the vehicle switches from the series mode to the idle electric four-wheel drive mode exceeds a time threshold, or the current vehicle speed is greater than a second vehicle speed threshold. The second state of charge threshold is less than the first state of charge threshold, the second power threshold is less than the first power threshold, and the second vehicle speed threshold is greater than the first vehicle speed threshold.

In some embodiments of the present application, the control device 300 for the vehicle with the hybrid power also includes:
a prohibition module, configured to prohibit the vehicle from switching from the series mode to the idle electric four-wheel drive mode in a preset duration time after the controlling the vehicle to switch from the idle electric four-wheel drive mode to the series mode when it is determined that the vehicle exits the slipping state or the working condition information satisfies the mode exit condition.

It should be noted that specific implementations of the control device 300 for a vehicle with the hybrid power in some embodiments of the present application refers to specific implementations of the control method for the vehicle with the hybrid power proposed in the first aspect of some embodiments of the present application, which will not be repeated herein.

In a third aspect, some embodiments of the present application provide a storage medium based on the same concept. The storage medium stores a machine-executable instruction. When the machine-executable instruction is executed by a processor, the control method for the vehicle with the hybrid power proposed in the first aspect of the present application is implemented.

It should be noted that specific implementations of the storage medium in some embodiments of the present application refers to specific implementations of the control method for the vehicle with the hybrid power proposed in the first aspect of the present application, which will not be repeated herein.

In the fourth aspect, with reference to FIG. 4, an embodiment of the present application provides a vehicle 400 based on the same concept. The vehicle includes a processor 401 and a memory 402. The memory 402 stores a machine-executable instruction being capable of be executed by the processor 401, and the processor 401 is configured to execute the machine-executable instruction to implement the control method for the vehicle with the hybrid power proposed in the first aspect of the present application.

It should be noted that specific implementations of the vehicle 400 in some embodiments of the present application refers to the specific implementation of the control method for the vehicle with the hybrid power proposed in the first aspect of the present application, which will not be repeated herein.

Those with ordinary skill in the art should understand that some embodiments of the present application may be provided as a method, a device, or a computer program product. Therefore, some embodiments of the present application are capable of adopting forms of a complete hardware embodiment, a complete software embodiment, or an embodiment combining software and hardware. Moreover, some embodiments of the present application are capable of adopting a form of a computer program product implemented on one or more storage mediums containing a computer-usable program code (including but not limited to a disk storage, a compact disc read-only memory (CD-ROM), an optical storage, or the like).

Some embodiments of the present application are described with reference to flowcharts and/or block diagrams of a method, a terminal device (a system), and a computer program product according to some embodiments of the present application. It should be understood that each process and/or block in the flowchart and/or the block diagram, and a combination of processes and/or blocks in the flowchart and/or the block diagram, may be implemented by computer program instructions. These computer program instructions may be provided to processors of a general-purpose computer, a special-purpose computer, an embedded processor, or other programmable data processing terminal device to produce a machine, so that the instructions executed by the processor of the computer or other programmable data processing terminal device produce a device for realizing functions specified in one or more processes of the flowchart and/or one or more blocks of the block diagram.

These computer program instructions may also be stored in the storage medium that may guide a computer or other programmable data processing terminal device to operate in a specific manner, enabling the instructions stored in the storage medium produce a manufactured product including an instruction device, the instruction device realizes specified functions in one or more processes of the flowchart and/or one or more blocks of the block diagram.

These computer program instructions may also be loaded onto a computer or other programmable data processing terminal device, enabling a series of operation steps to be executed on the computer or other programmable terminal device to produce computer-implemented processing, so that the instructions executed on the computer or other programmable terminal device provide steps for realizing the specified functions in one or more processes of the flowchart and/or one or more blocks of the block diagram.

The control method, the device, the storage medium, and the vehicle for the vehicle with the hybrid power provided by the present application are described in detail above. A specific example is used in this article to explain a principle and an implementation of the present application. The description of the above embodiments is only used for helping understand the method and a core idea of the present application. For person with ordinary skill in the field, according to an idea of the present application, there will be changes in specific implementation methods and application scope. In summary, the content of the specification should not be understood as a limitation to the present application.

## Claims

1. A control method for a vehicle with a hybrid power, comprising:
acquiring a current driving mode and a working condition information of the vehicle in a case that the vehicle is determined to be in a slipping state;
determining whether the vehicle satisfies a mode switching condition based on the working condition information; and
controlling the vehicle to switch from a series mode to an idle electric four-wheel drive mode in a case that the current driving mode is the series mode and the vehicle satisfies the mode switching condition; and in the idle electric four-wheel drive mode, a front drive motor and a rear drive motor of the vehicle are in a driving state, and an engine remains in an idle state.

2. The control method for the vehicle with the hybrid power according to claim 1, wherein before the acquiring the current driving mode and the working condition information of the vehicle in the case that the vehicle is determined to be in the slipping state, the method comprises:
acquiring a first speed difference between a left rear wheel and a right rear wheel and a first duration time of the first speed difference, and a second wheel speed difference between an average wheel speed of two wheels on a front axle and an average wheel speed of two wheels on a rear axle and a second duration time of the second wheel speed difference; and
determining whether the vehicle is in the slipping state based on the first speed difference and the first duration time, or based on the second wheel speed difference and the second duration time.

3. The control method for the vehicle with the hybrid power according to claim 2, wherein the determining whether the vehicle is in the slipping state based on the first speed difference and the first duration time, or based on the second wheel speed difference and the second duration time comprises:
determining a first speed difference threshold, a first duration time threshold, a second speed difference threshold, and a second duration time threshold based on a current steering wheel angle of the vehicle and a current slope of a position where the vehicle is located; and
determining the vehicle is in the slipping state in a case that the first speed difference is greater than the first speed difference threshold and the first duration time is greater than the first duration time threshold, or in a case that the second speed difference is greater than the second speed difference threshold and the second duration time is greater than the second duration time threshold.

4. The control method for the vehicle with the hybrid power according to claim 1, wherein the working condition information comprises a current gear position, a current vehicle speed, and a current battery level and a sustained discharge power of a power battery, the sustained discharge power represents a discharge power that the power battery is capable of continuously outputting in a preset duration time; and
the determining whether the vehicle satisfies the mode switching condition based on the working condition information comprises:
acquiring a current battery temperature of the power battery, a current slope of a position where the vehicle is located and a current ambient temperature;
determining a first state of charge threshold based on the current battery temperature and the current ambient temperature, and determining a first power threshold based on the current vehicle speed and the current slope; and
determining that the vehicle satisfies the mode switching condition when the current gear position is a forward gear or a reverse gear, the current vehicle speed is less than a first vehicle speed threshold, and the current battery level is greater than the first state of charge threshold and the sustained discharge power is greater than the first power threshold.

5. The control method for the vehicle with the hybrid power according to claim 1, wherein after the controlling the vehicle to switch from the series mode to the idle electric four-wheel drive mode in the case that the current driving mode is the series mode and the vehicle satisfies the mode switching condition, the method further comprises:
controlling the vehicle to switch from the idle electric four-wheel drive mode to a direct drive mode when it is detected that an accelerator pedal opening of the vehicle is greater than an accelerator pedal opening threshold; and in the direct drive mode, the front drive motor, the rear drive motor, and the engine are all in a driving state.

6. The control method for the vehicle with the hybrid power according to claim 5, wherein the controlling the vehicle to switch from the idle electric four-wheel drive mode to the direct drive mode further comprises:
sending a clutch engagement command to a transmission controller;
in response to the clutch engagement command, controlling, by the transmission controller, a clutch to engage;
sending a torque control request to an engine controller after detecting that the clutch is engaged; and
controlling the engine to output torque in response to the torque control request.

7. The control method for the vehicle with the hybrid power according to claim 4, wherein after the controlling the vehicle to switch from the series mode to the idle electric four-wheel drive mode in the case that the current driving mode is the series mode and the vehicle satisfies the mode switching condition, the method further comprises:
determining whether the vehicle exits the slipping state and whether the working condition information satisfies a mode exit condition; and
controlling the vehicle to switch from the idle electric four-wheel drive mode to the series mode when it is determined that the vehicle exits the slipping state or the working condition information satisfies the mode exit condition.

8. The control method for the vehicle with the hybrid power according to claim 7, wherein the determining whether the vehicle exits the slipping state comprises:
determining a third speed difference threshold and a fourth speed difference threshold based on the current slope of the position where the vehicle is located and a current steering wheel angle of the vehicle; and determining a third duration time threshold and a fourth duration time threshold based on the current slope, the current steering wheel angle, a driver demand power, and the sustained discharge power of the power battery;
acquiring a third speed difference between a left rear wheel and a right rear wheel and a third duration time of the third speed difference, and a fourth wheel speed difference between an average wheel speed of two wheels on a front axle and an average wheel speed of two wheels on a rear axle and a fourth duration time of the fourth wheel speed difference; and
determining that the vehicle exits the slipping state in a case that the third speed difference is less than the third speed difference threshold and the third duration time is greater than the third duration time threshold, or in a case that a fourth speed difference is less than the fourth speed difference threshold and the fourth duration time is greater than the fourth duration time threshold.

9. The control method for the vehicle with the hybrid power according to claim 8, wherein the determining the third duration time threshold and the fourth duration time threshold based on the current slope, the current steering wheel angle, the driver demand power, and the sustained discharge power of the power battery comprises:
determining a first initial duration time threshold and a second initial duration time threshold based on the current slope and the current steering wheel angle;
determining a first compensation time threshold and a second compensation time threshold based on the driver demand power and the sustained discharge power of the power battery;
determining the third duration time threshold based on the first initial duration time threshold and the first compensation time threshold; and
determining the fourth duration time threshold based on the second initial duration time threshold and the second compensation time threshold.

10. The control method for the vehicle with the hybrid power according to claim 9, wherein the driver demand power represents a demand power demanded by a driver through an accelerator pedal.

11. The control method for the vehicle with the hybrid power according to claim 7, wherein the determining whether the working condition information satisfies the mode exit condition comprises:
when it is detected that the current gear position of the vehicle is not in the forward gear or the reverse gear, the current battery level is less than a second state of charge threshold, the sustained discharge power is less than a second power threshold, a total duration time that the vehicle switches from the series mode to the idle electric four-wheel drive mode exceeds a time threshold, or the current vehicle speed is greater than a second vehicle speed threshold, determining that the working condition information satisfies the mode exit condition, wherein, the second state of charge threshold is less than the first state of charge threshold, the second power threshold is less than the first power threshold, and the second vehicle speed threshold is greater than the first vehicle speed threshold.

12. The control method for the vehicle with the hybrid power according to claim 7, wherein after the controlling the vehicle to switch from the idle electric four-wheel drive mode to the series mode when it is determined that the vehicle exits the slipping state or the working condition information satisfies the mode exit condition, the method further comprises:
prohibiting the vehicle from switching from the series mode to the idle electric four-wheel drive mode in a preset duration time.

13. A control device for a vehicle with a hybrid power, comprising:
a first acquisition module, configured to acquire a current driving mode and a working condition information of the vehicle in a case that the vehicle is determined to be in a slipping state;
a first determination module, configured to determine whether the vehicle satisfies a mode switching condition based on the working condition information; and
a second control module, configured to control the vehicle to switch from a series mode to an idle electric four-wheel drive mode in a case that the current driving mode is the series mode and the vehicle satisfies the mode switching condition; and in the idle electric four-wheel drive mode, a front drive motor and a rear drive motor of the vehicle are in a driving state, and an engine remains in an idle state.

14. A storage medium storing a machine-executable instruction, wherein when the machine-executable instruction is executed by a processor, the control method for the vehicle with the hybrid power according to any one of claims 1 to 12 is implemented.

15. A vehicle, comprising a processor and a memory, wherein the memory stores a machine-executable instruction being capable of be executed by the processor, and the processor is configured to execute the machine-executable instruction to implement the control method for the vehicle with the hybrid power according to any one of claims 1 to 12.
